# EUROPEAN PATENT APPLICATION

(11) **EP 4 557 852 A1**
(43) Date of publication of application: **21.05.2025**
(21) Application number: 24793962.2
(22) Date of filing: 16.07.2024
(51) Int. Cl.: H04W 64/00, H04W 24/08, G01S 11/06, H04B 17/318, H04W 4/029, H04L 5/00, G01S 5/02

(54) **METHOD FOR DETERMINING POSITION OF ELECTRONIC DEVICE, AND ELECTRONIC DEVICE PERFORMING SAME**

(30) Priority: 27.09.2023 KR 20230130086; 30.11.2023 KR 20230171215
(71) Applicant: Samsung Electronics Co., Ltd., Gyeonggi-do 16677 (KR)
(72) Inventor: CHOI, Junsu, Suwon-si Gyeonggi-do 16677 (KR); KIM, Gibeom, Suwon-si Gyeonggi-do 16677 (KR); YUN, Jusik, Suwon-si Gyeonggi-do 16677 (KR)
(74) Representative: HGF
(86) International application number: PCT/KR2024/010207
(87) International publication number: WO 2025/070969

(57) **Abstract**

A method of determining a position according to an embodiment may include transmitting a first message to one or more external electronic devices, receiving one or more second messages from the one or more external electronic devices, generating a first signal strength pattern for the one or more external electronic devices, based on the second messages, determining a target reference signal strength pattern corresponding to the first signal strength pattern among one or more reference signal strength patterns, and determining a position of the electronic device based on the target reference signal strength pattern.

## Description

### BACKGROUND

### 1. Field

An embodiment relates to a technique for determining the position of an electronic device, and more particularly, to a technique for determining the position of an electronic device located indoors.

### 2. Description of Related Art

The Global Positioning System (GPS), which is used to determine the position of an electronic device outdoors, may not be used when the electronic device is located indoors or may have reduced accuracy when the electronic device is located indoors. In an example, similar to GPS, a method that uses one or more anchor devices whose positions of installation are known in advance may be used to determine the position of an indoor electronic device. However, the method that uses anchor devices may be used only when the anchor devices are installed indoors in advance and a sensor capable of measuring distances with high reliability is mounted on the electronic device.

### SUMMARY

According to an embodiment, an electronic device includes a communication module, at least one processor, and a memory configured to store instructions executable by the at least one processor, wherein the instructions, when executed by the at least one processor, cause the electronic device: transmit a first message to one or more external electronic devices, through the communication module, receive one or more second messages from the one or more external electronic devices, through the communication module, generate a first signal strength pattern for the one or more external electronic devices, based on the second messages, determine a target reference signal strength pattern corresponding to the first signal strength pattern among one or more reference signal strength patterns, and determine a position of the electronic device based on the target reference signal strength pattern.

According to an embodiment, a method of determining a position of an electronic device includes transmitting a first message to one or more external electronic devices, receiving one or more second messages from the one or more external electronic devices, generating a first signal strength pattern for the one or more external electronic devices, based on the second messages, determining a target reference signal strength pattern corresponding to the first signal strength pattern among one or more reference signal strength patterns, and determining a position of the electronic device based on the target reference signal strength pattern.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram of an electronic device in a network environment, according to an embodiment.
FIG. 2 is a plan view of an indoor environment where external electronic devices and an electronic device are arranged, according to an embodiment.
FIG. 3 is a flowchart of a method of determining the position of an electronic device, according to an embodiment.
FIG. 4 is a signal flowchart of a method of receiving reference signal strength patterns from external electronic devices by an electronic device, according to an embodiment.
FIG. 5 is a signal flowchart of a method of receiving second messages in response to a first message from external electronic devices by an electronic device, according to an embodiment.
FIG. 6 is a flowchart of a method of determining a target reference signal strength pattern corresponding to a first signal strength pattern among reference signal strength patterns, according to an embodiment.
FIG. 7 illustrates a coordinate system in which one or more reference signal strength patterns and a first signal strength pattern are arranged, according to an embodiment.
FIG. 8 is a flowchart of a method of determining a first signal strength pattern having a minimum distance based on the distances between a first signal strength pattern and reference signal strength patterns, according to an embodiment.
FIG. 9 illustrates the distances between a first signal strength pattern shifted in a target direction and reference signal strength patterns, according to an embodiment.
FIG. 10 is a flowchart of a method of determining whether a target reference signal strength pattern corresponds to a first signal strength pattern based on the calculated minimum distance and a threshold distance between the first signal strength pattern and the target reference signal strength pattern, according to an embodiment.
FIG. 11 is a flowchart of a method of updating a reference signal strength pattern, performed by an external electronic device, according to an embodiment.
FIG. 12 is a flowchart of a method of determining whether a current reference signal strength pattern corresponds to a previous reference signal strength pattern, according to an embodiment.

### DETAILED DESCRIPTION

Hereinafter, various embodiments of the present disclosure will be described with reference to the accompanying drawings. However, this is not intended to limit the present disclosure to specific embodiments, and it should be understood that various modifications, equivalents, and/or alternatives of the embodiments of the present disclosure are included.

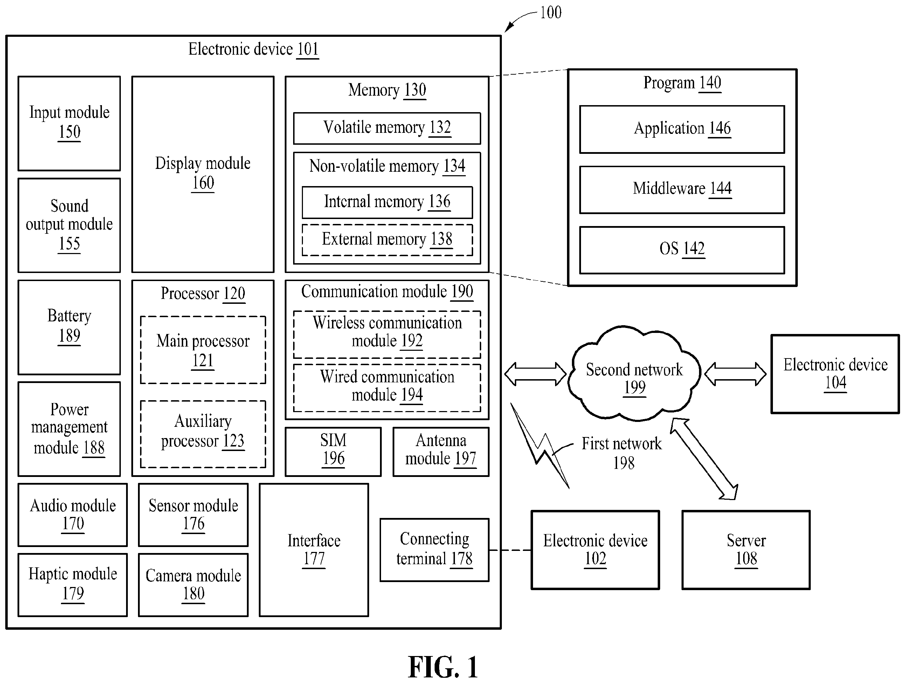

FIG. 1 is a block diagram of an electronic device in a network environment according to an embodiment.

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. **In** some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented as separate from, or as part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An artificial intelligence model may be generated by machine learning. Such learning may be performed, e.g., by the electronic device 101 where the artificial intelligence is performed, or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network, or a combination of two or more thereof, but is not limited thereto. The artificial intelligence model may, additionally or alternatively, include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing a record. The receiver may be used for receiving incoming calls. According to an embodiment, the receiver may be implemented separately from the speaker or as a portion of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to sense a touch, or a pressure sensor adapted to measure an intensity of a force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a portion of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a portion of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more of external electronic devices (e.g., the external electronic devices 102 and 104, or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. according to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least portion of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

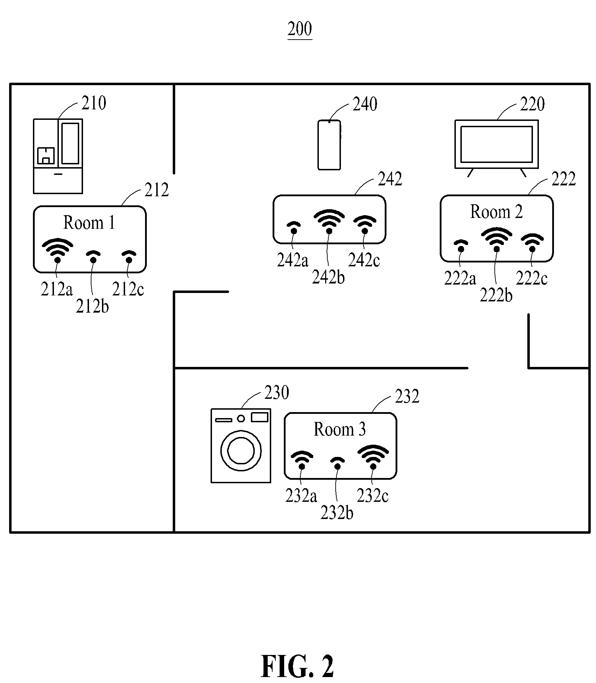

FIG. 2 is a plan view of an indoor environment where external electronic devices and an electronic device are arranged, according to an embodiment.

According to an embodiment, external electronic devices 210, 220, and 230 (e.g., the electronic device 102 of FIG. 1) installed indoors are used to determine the position, such as the indoor position, of an electronic device 240 (e.g., the electronic device 101 of FIG. 1). For example, the electronic device 240 generates a signal strength pattern (herein, this may also be known as signal strength information, or an indication of relative signal strengths, or the like) for the external electronic devices 210, 220, and 230 based on information for measuring received signal strength indicator (RSSI) values (or other suitable signal strength information) included in signals transmitted from the external electronic devices 210, 220, and 230 to the electronic device 240, and determine the position of the electronic device 240 based on the generated signal strength pattern. For example, it is determined which of the external electronic devices 210, 220, and 230 is located closest to the electronic device 240, and the position of installation of the determined external electronic device (i.e. the position of the determined external electronic device) is determined to be the current position of the electronic device 240. It will be appreciated that determining the position of the electronic device 240 may include determining a room or section of an indoor area in which the electronic device 240 is located, or determining a more-precise location of the electronic device 240 within an indoor area.

For example, each of the external electronic devices 210, 220, and 230 are a home appliance. The home appliance may include a television, a refrigerator, a washing machine, a dryer, a sound bar, a microwave oven, a speaker, a computer, an audio, a water purifier, a vacuum cleaner, or an access point (AP), and is not limited to the described embodiments.

According to an embodiment, the first external electronic device 210 is installed in a first room (Room 1), the second external electronic device 220 is installed in a second room (Room 2), and the third external electronic device 230 is installed in a third room (Room 3). The first external electronic device 210 may generate a first reference signal strength pattern 212 based on the signals received from the external electronic devices 210, 220, and 230. For example, the first reference signal strength pattern 212 includes a signal strength 212a of the signal from the first external electronic device 210, a signal strength 212b of the signal from the second external electronic device 220, and a signal strength 212c of the signal from the third external electronic device 230, the signals received by the first external electronic device 210. For example, the second reference signal strength pattern 222 includes a signal strength 222a of the signal from the first external electronic device 210, a signal strength 222b of the signal from the second external electronic device 220, and a signal strength 222c of the signal from the third external electronic device 230, the signals received by the second external electronic device 220. For example, the third reference signal strength pattern 232 includes a signal strength 232a of the signal from the first external electronic device 210, a signal strength 232b of the signal from the second external electronic device 220, and a signal strength 232c of the signal from the third external electronic device 230, the signals received by the third external electronic device 230. The signal strengths may be RSSI values.

According to an embodiment, since the first external electronic device 210 (or the second external electronic device 220 or the third external electronic device 230) may not receive the signal transmitted by itself, the signal strength 212a of the first reference signal strength pattern 212 (or the signal strength 222b of the second reference signal strength pattern 222 or the signal strength 232c of the third reference signal strength pattern 232) may be preset. For example, the signal strength 212a corresponds to the signal strength of a signal transmitted from one to another when electronic devices the same as (i.e. of the same type as) the first external electronic device 210 are arranged adjacent to each other. The same electronic devices may be electronic devices with the same manufacturing model or the same performance of communication modules mounted thereon. In other examples, the signal strength 212a is omitted from the first reference signal strength pattern 222 in view of the first external device 210 being unable to receive a signal transmitted by itself - in such cases, the reference signal pattern of each external device is based on the signal strengths of the other external devices.

According to an embodiment, the external electronic devices 210, 220, and 230 transmit the generated reference signal strength patterns 212, 222, and 232 to the electronic device 240 or a server (e.g., the server 108 of FIG. 1). For example, the electronic device 240 obtains the reference signal strength patterns 212, 222, and 232 from the external electronic devices 210, 220, and 230 directly (e.g. without the reference signal strength patterns 212, 222, 232 being sent/received via an intermediary device, or where the reference signal strength patterns 212, 222, 232 are sent/received using another device located in the same indoor area such as a wireless router) using an application for determining the position of the electronic device 240 (or, more generally, an application), installed in the electronic device 240. For example, the electronic device 240 obtains the reference signal strength patterns 212, 222, and 232 from the server through the application for determining the position of the electronic device 240, installed on the electronic device 240. For example, the application for determining the position of the electronic device 240 may be an application (e.g., a home automation application) that allows remote control of the external electronic devices 210, 220, and 230.

According to an embodiment, the electronic device 240 determines a signal strength 242a of the signal received from the first external electronic device 210, determines a signal strength 242b of the signal received from the second external electronic device 220, and determines a signal strength 242c of the signal received from the third external electronic device 230, at the current position. The electronic device 240 may generate a signal strength pattern 242 to include the signal strength 242a, the signal strength 242b, and the signal strength 242c. It will be appreciated that, in various examples, the electronic device 240 generates a signal strength pattern to include a signal strength for one or more external devices, such as may be provided at/in a location (e.g. in a home, office, workplace, public place etc.). **In** some examples, this may not include a signal strength for every external device provided at a location as it is possible that a signal from an external device is not received (or is too weak to be suitably received etc.).

According to an embodiment, the electronic device 240 determines the position of the electronic device 240 using the signal strength pattern 242 and the reference signal strength patterns 212, 222, and 232. For example, the electronic device 240 determines an external electronic device having a reference signal strength pattern corresponding to the signal strength pattern 242, and determines the position at which the determined external electronic device is installed (i.e. located/positioned) to be the position of the electronic device 240. Since the signal strength pattern 242 of the electronic device 240 corresponds to the second reference signal 222 of the second external electronic device 220 in the shown example, the position of the electronic device 240 may be determined to be the second room where the second external electronic device 220 is installed. In another example of Figure 2, the position of the electronic device 240 may be determined to be nearest to the second external electronics device 220.

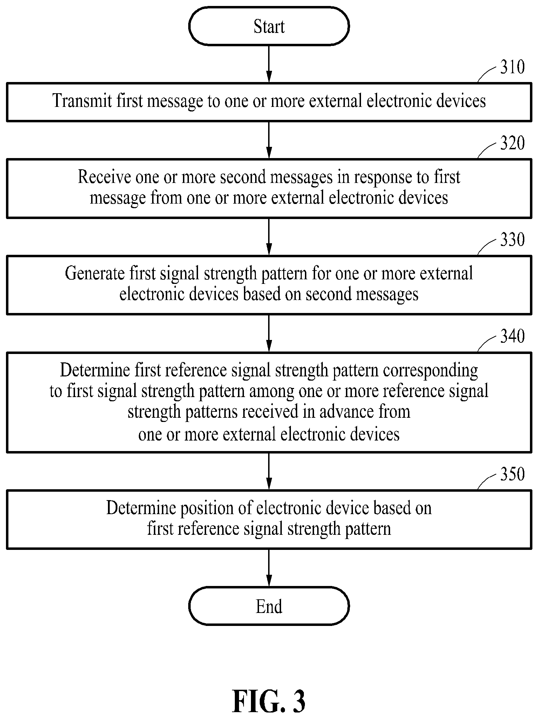

Hereinafter, a method of determining the position of the electronic device 240 is described in more detail with reference to FIGS. 3 to 10.

FIG. 3 is a flowchart of a method of determining the position of an electronic device, according to an embodiment.

Operations 310 to 350 described below may be performed by an electronic device (e.g., the electronic device 101 of FIG. 1 or the electronic device 240 of FIG. 2). For example, the electronic device includes a processor (e.g., the processor 120 of FIG. 1), a communication module (e.g., the communication module 190 of FIG. 1), a memory (e.g., the memory 130 of FIG. 1), and, optionally, a display (e.g., the display module 160 of FIG. 1).

In operation 310, the processor of the electronic device may transmit a first message to one or more external electronic devices (e.g., the external electronic devices 210, 220, and 230 of FIG. 2) through the communication module. For example, the first message is a message related to a probe request.

According to an embodiment, the electronic device broadcasts the first message including a service set identifier (SSID) of an external electronic device (or, more generally, identification information of the external electronic device). For example, even if an external electronic device does not operate as an access point (AP) for other electronic devices, the external electronic device may operate as an AP for an electronic device that knows the SSID of the external electronic device. The external electronic device temporarily operating as an AP for the electronic device may receive the first message from the electronic device. For example, the electronic device receives the SSID from the external electronic device in the process of registering the external electronic device in the home automation application. The external electronic device may not operate as an AP for a first message not including the SSID of the external electronic device.

The electronic device may broadcast the first message to an external electronic device operating in a soft AP mode. For example, when a mode for determining the position of the electronic device is performed, the electronic device changes the mode of the external electronic device to the soft AP mode through the home automation application. For example, the electronic device broadcasts a signal instructing a change of the mode of the external electronic device to the soft AP mode. For example, the electronic device transmits a command instructing a change to the soft AP mode to the external electronic device through a server for the home automation application. When the external electronic device operates in the soft AP mode, the external electronic device may set a radio frequency channel (e.g., a 2.4-GHz band, a 5-GHz band, or a 6-GHz band) used in the AP mode to be the same as the radio frequency channel used in a station mode.

According to an embodiment, when a user executes or refreshes the home automation application, the electronic device transmits the first message to one or more external electronic devices.

According to an embodiment, the electronic device periodically transmits the first message to one or more external electronic devices.

In operation 320, the processor of the electronic device receives one or more second messages in response to the first message from the one or more external electronic devices through the communication module. For example, the second messages are messages related to a probe response. For example, the second messages include information for measuring RSSI values (more generally, e.g.: signal strength information, information indicating a strength of a signal, information usable for measuring a signal strength etc.).

In operation 330, the processor of the electronic device generates a first signal strength pattern (e.g., the signal strength pattern 242 of FIG. 2) for the one or more external electronic devices based on the second messages. The first signal strength pattern may include signal strengths for the second messages received by the electronic device from the one or more external devices.

According to an embodiment, the processor of the electronic device measures (or calculate, determine, obtain etc., as will be understood herein) the RSSI value for a corresponding external electronic device based on a second message. For example, the electronic device measures a first RSSI value for a first external electronic device (e.g., the first external electronic device 210 of FIG. 2), measures a second RSSI value for a second external electronic device (e.g., the second external electronic device 220 of FIG. 2), and measures a third RSSI value for a third external electronic device (e.g., the third external electronic device 230 of FIG. 2). The electronic device may generate the first signal strength pattern to include the first RSSI value, the second RSSI value, and the third RSSI value. In general, the electronic device may measure a RSSI value for each external electronic device from which the electronics device receives a reply (i.e. a second message).

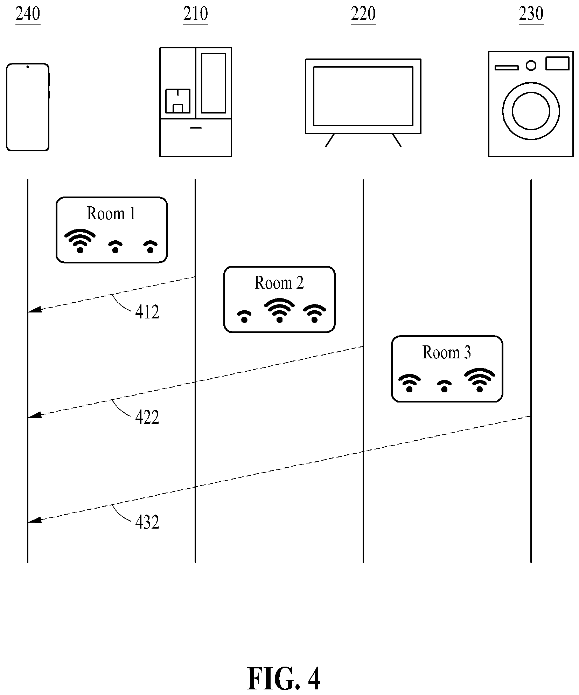

In operation 340, the processor of the electronic device determines (hereafter, this may be alternatively be referred to as identify, obtain, derive etc.) a target reference signal strength pattern corresponding to the first signal strength pattern among one or more reference signal strength patterns received from the one or more external electronic devices or stored (e.g. prestored or registered) in the electronic device. For example, before operation 310 is performed, the electronic device receives the one or more reference signal strength patterns in advance from the one or more external electronic devices. The term "target reference signal strength pattern" may be one of the one or more reference signal strength patterns, i.e. the one determined as corresponding to the first signal strength pattern. Hereinafter, a method of receiving the one or more reference signal strength patterns from the one or more external electronic devices by the electronic device is described in detail with reference to FIG. 4.

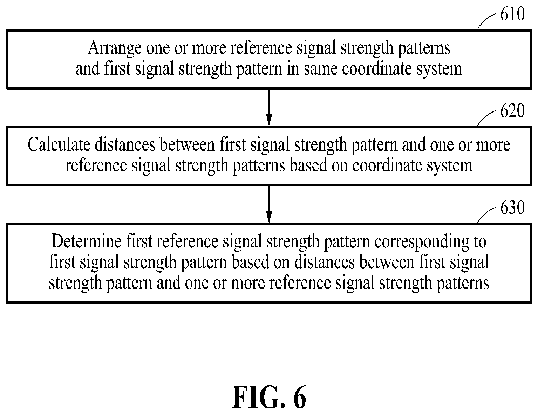

According to an embodiment, the processor of the electronic device determines one of the reference signal strength patterns, i.e. the most similar to the first signal strength pattern, to be the target reference signal strength pattern. The similarity between the first signal strength pattern and a reference signal strength pattern may be determined based on the distance between a first element of the first signal strength pattern and a corresponding first element of the reference signal strength pattern. For example, a coordinate system may be used to calculate the distances between the first signal strength pattern and the reference signal strength patterns. Hereinafter, a method of determining the target reference signal strength pattern corresponding to the first signal strength pattern among the reference signal strength patterns is described in detail with reference to FIGS. 6 to 10.

In operation 350, the processor of the electronic device determines (hereafter, this may be alternatively be referred to as identify, obtain, estimate etc.) the position of the electronic device based on the target reference signal strength pattern. For example, the electronic device determines the position set in the first external electronic device generating the target reference signal strength pattern (e.g., the position of installation) to be the position of the electronic device. For example, the electronic device receives (e.g. before step 310 or even anytime prior to step 350), information on a position (e.g. location information) of the first external electronic device or the one or more external electronic device. As such, upon determining the one of the reference signal strength patterns, the electronic device may determine the position of the external electronic device corresponding to the one of the reference signal strength patterns based on the received information on the position on the position for this external electronic device. In some examples, the information on a position is received from the first external electronic device (e.g. information on a position of the one or more external electronic device is received from each of the one or more external electronic device), and in other examples, the information on a position is provided to the electronic device by other means, such as being input by a user (e.g. in the example of Figure 2, a user may provide the electronic device 240 with the information that the second external electronic device 220 is in the second room). In various examples, the electronic device 240 stores a reference table or look-up table which indicates a position for each of the one or more external electronic device(s).

According to an embodiment, the processor of the electronic device further determine the direction in which the electronic device is located from, or the direction in which the electronic device is moving relative to, the first external electronic device based on the first signal strength pattern and the target reference signal strength pattern. The processor of the electronic device may determine, based on the first signal strength pattern and the target reference signal strength pattern (and, optionally, the second signal strength pattern), whether the electronic device is located between the first external electronic device and the second external electronic device or is not located between the first external electronic device and the second external electronic device, or a direction the electronic device is moving relative to the first external electronic device. For example, when the first RSSI value of the first signal strength pattern decreases and the second RSSI value of the first signal strength pattern increases compared to the target reference signal strength pattern, the electronic device may be determined to be positioned between the first external electronic device and the second external electronic device, or to be moving away from the first external electronic device (and, optionally, towards the second external electronic device). For example, when the first RSSI value of the first signal strength pattern decreases and the second RSSI value of the first signal strength pattern decreases compared to the target reference signal strength pattern, the electronic device may be determined not to be positioned between the first external electronic device and the second external electronic device, or to be moving away from the first external electronic device (and, optionally, away from the second external electronic device).

According to an embodiment, the processor of the electronic device controls the operation of the one or more external electronic devices based on the determined position of the electronic device. For example, when the position of the electronic device changes from a first room to a second room, the processor of the electronic device turns off an external electronic device located in the first room and turn on an external electronic device located in the second room. For example, the processor of the electronic device controls the operation of the external electronic devices through an application for remotely controlling external electronic devices.

FIG. 4 is a signal flowchart of a method of receiving reference signal strength patterns from external electronic devices by an electronic device, according to an embodiment.

According to an embodiment, operations 412, 422, and 432 below may be performed for an electronic device (e.g., the electronic device 101 of FIG. 1 or the electronic device 240 of FIG. 2) to receive one or more reference signal strength patterns from one or more external electronic devices (e.g., the external electronic devices 210, 220, and 230 of FIG. 2). For example, operations 412, 422, and 432 may be performed before operation 310 described above with reference to FIG. 3 is performed.

In operation 412, a processor (e.g., the processor 120 of FIG. 1) of the electronic device 240 may receive an event message including a first reference signal strength pattern (e.g., the first reference signal strength pattern 212 of FIG. 2) from the first external electronic device 210 through a communication module (e.g., the communication module 190 of FIG. 1). For example, the electronic device 240 may receive the first reference signal strength pattern transmitted by the first external electronic device 210 through a server (e.g., the server 108 of FIG. 1). For example, the server may be a server for a home automation application.

According to an embodiment, the first external electronic device 210 generates the event message including the first reference signal strength pattern. For example, the first external electronic device 210 determines a signal strength (e.g., the signal strength 212b) of the second external electronic device 220 based on a preamble of a frame transmitted by the second external electronic device 220 to the first external electronic device 210. For example, the first external electronic device 210 determines the signal strength (e.g., the signal strength 212b) of the second external electronic device 220 based on information for measuring an RSSI value included in a signal transmitted by the second external electronic device 220 to the first external electronic device 210. For example, the first external electronic device 210 determines a signal strength (e.g., the signal strength 212c) of the third external electronic device 230 based on information for measuring an RSSI value included in a signal transmitted by the third external electronic device 230 to the first external electronic device 210. For example, the first external electronic device 210 determines a preset signal strength to be the signal strength (e.g., the signal strength 212a) of the first external electronic device 210. For example, the preset signal strength is the maximum signal strength measurable in the first external electronic device 210 or a strength greater than or equal to a threshold value. The first external electronic device 210 may generate the first reference signal strength pattern to include the signal strength of the first external electronic device 210, the signal strength of the second external electronic device 220, and the signal strength of the third external electronic device 230.

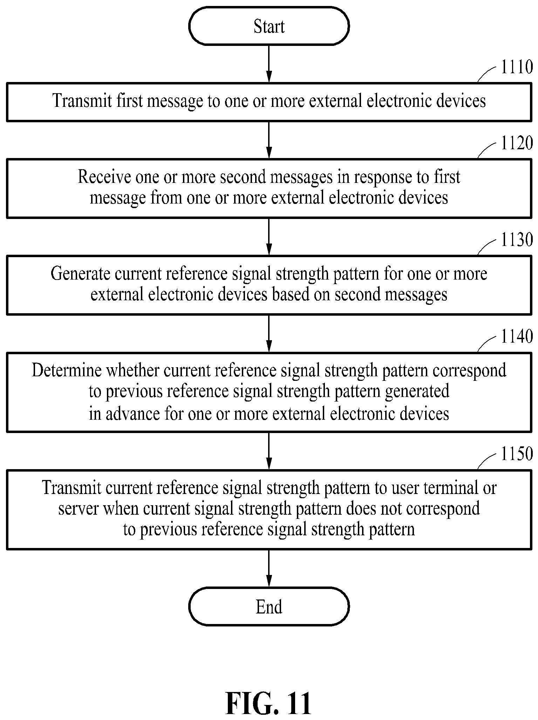

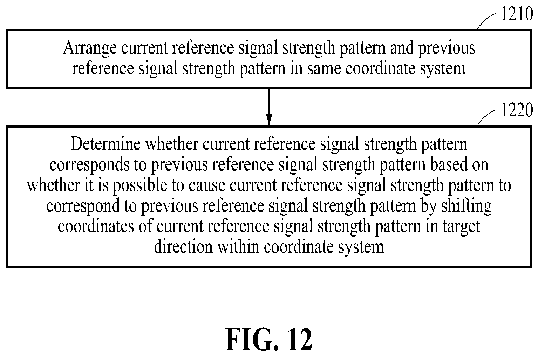

According to an embodiment, the first external electronic device 210 transmits the event message including the first reference signal strength pattern to the electronic device 240 or the server when the generated first reference signal strength pattern (or current reference signal strength pattern) is different from a previous reference signal strength pattern generated by the first external electronic device 210. For example, when at least one signal strength of the first reference signal strength pattern is different from a corresponding signal strength of the previous reference signal strength pattern, it may be determined that the first reference signal strength pattern is different from the previous reference signal strength pattern. For example, when the number of external electronic devices associated with the first reference signal strength pattern is different from the number of external electronic devices associated with the previous reference signal strength pattern, it may be determined that the first reference signal strength pattern is different from the previous reference signal strength pattern. In another example, when a signal strength included in the generated first reference signal strength pattern is different to the corresponding signal strength in the previous reference signal strength pattern by more than a predetermined/predefined amount, it may be determined that the first reference signal strength pattern is different from the previous reference signal strength pattern. Hereinafter, a method of transmitting the event message including the first reference signal strength pattern to the electronic device 240 by the first external electronic device 210 is described in detail with reference to FIGS. 11 and 12.

In operation 422, the processor of the electronic device 240 may receive an event message including a second reference signal strength pattern (e.g., the second reference signal strength pattern 222 of FIG. 2) from the second external electronic device 220 through the communication module. The description of operation 422 is omitted below since the description of operation 412 is similarly applicable thereto.

In operation 432, the processor of the electronic device 240 may receive an event message including a third reference signal strength pattern (e.g., the third reference signal strength pattern 232 of FIG. 2) from the third external electronic device 230 through the communication module. The description of operation 432 is omitted below since the description of operation 412 is similarly applicable thereto.

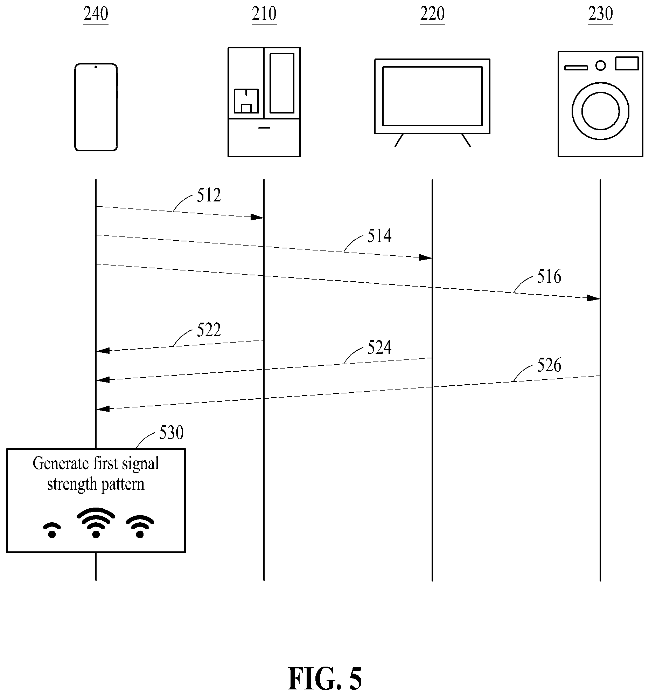

FIG. 5 is a signal flowchart of a method of receiving second messages in response to a first message from external electronic devices by an electronic device, according to an embodiment.

According to an embodiment, operations 512, 514, and 516 below may be related to operation 310 described above with reference to FIG. 3. For example, operations 512, 514, and 516 may be performed when the current position of the electronic device 240 (e.g., the electronic device 101 of FIG. 1) needs to be determined. For example, operations 512, 514, and 516 may be performed when the home automation application of the electronic device 240 is executed or refreshed.

In operation 512, the electronic device 240 may transmit a first message to the first external electronic device 210. For example, the first message is a message related to a probe request.

According to an embodiment, the electronic device 240 identifies the first external electronic device 210 among one or more external electronic devices (e.g., the external electronic devices 210, 220, and 230 of FIG. 2), and transmits the first message to the identified first external electronic device 210.

According to an embodiment, the first external electronic device 210 operates as an AP for the electronic device 240 that knows the SSID of the first external electronic device 210.

According to an embodiment, the first external electronic device 210 operates as a soft AP.

In operation 514, the electronic device 240 may transmit the first message to the second external electronic device 220. The description of operation 514 is omitted below since the description of operation 512 is similarly applicable thereto.

In operation 516, the electronic device 240 may transmit the first message to the third external electronic device 230. The description of operation 516 is omitted below since the description of operation 512 is similarly applicable thereto.

According to an embodiment, operations 522, 524, and 526 below may be related to operation 320 described above with reference to FIG. 3.

In operation 522, the electronic device 240 may receive a second message in response to the first message from the first external electronic device 210. For example, the second message is a message related to a probe response. Since the first external electronic device 210 is operating as an AP or soft AP for the electronic device 240, the first external electronic device 210 may transmit the second message to the electronic device 240 in response to the received first message. For example, the second messages includes information for (e.g. suitable for) measuring RSSI values. The electronic device 240 receiving the second message may determine the signal strength (e.g., the signal strength 242a of FIG. 2) of the first external electronic device based on information for measuring the RSSI value of the second message.

In operation 524, the electronic device 240 may receive a second message in response to the first message from the second external electronic device 220. The electronic device 240 receiving the second message may determine the signal strength (e.g., the signal strength 242b of FIG. 2) of the second external electronic device based on information for measuring the RSSI value of the second message.

In operation 526, the electronic device 240 may receive a second message in response to the first message from the third external electronic device 230. The electronic device 240 receiving the second message may determine the signal strength (e.g., the signal strength 242c of FIG. 2) of the third external electronic device based on information for measuring the RSSI value of the second message.

According to an embodiment, operation 530 below may be related to operation 330 described above with reference to FIG. 3.

Although operations 512, 514, 516, 522, 524, and 526 are shown as being performed sequentially, operation 522 may be performed at any time after operation 512 is performed, and whether or when operation 522 is performed may be unrelated to whether or when operation 514 or 516 is performed. Operation 524 may be performed at any time after operation 514 is performed, and whether or when operation 524 is performed may be unrelated to whether or when operation 512 or 516 is performed. Operation 526 may be performed at any time after operation 516 is performed, and whether or when operation 526 is performed may be unrelated to whether or when operation 512 or 514 is performed. In operation 530, the electronic device 240 may generate a first signal strength pattern (e.g., the signal strength pattern 242 of FIG. 2). For example, the first signal strength pattern may include the signal strength of the first external electronic device, the signal strength of the second external electronic device, and the signal strength of the third external electronic device.

FIG. 6 is a flowchart of a method of determining a target reference signal strength pattern corresponding to a first signal strength pattern among reference signal strength patterns, according to an embodiment.

According to an embodiment, operations 610 to 630 below may be related to operation 340 described above with reference to FIG. 3. For example, operation 340 includes operations 610 to 630. Operations 610 to 630 may be performed by an electronic device (e.g., the electronic device 101 of FIG. 1 or the electronic device 240 of FIG. 2). For example, the electronic device may include a processor (e.g., the processor 120 of FIG. 1), a communication module (e.g., the communication module 190 of FIG. 1), a memory (e.g., the memory 130 of FIG. 1), and a display (e.g., the display module 160 of FIG. 1).

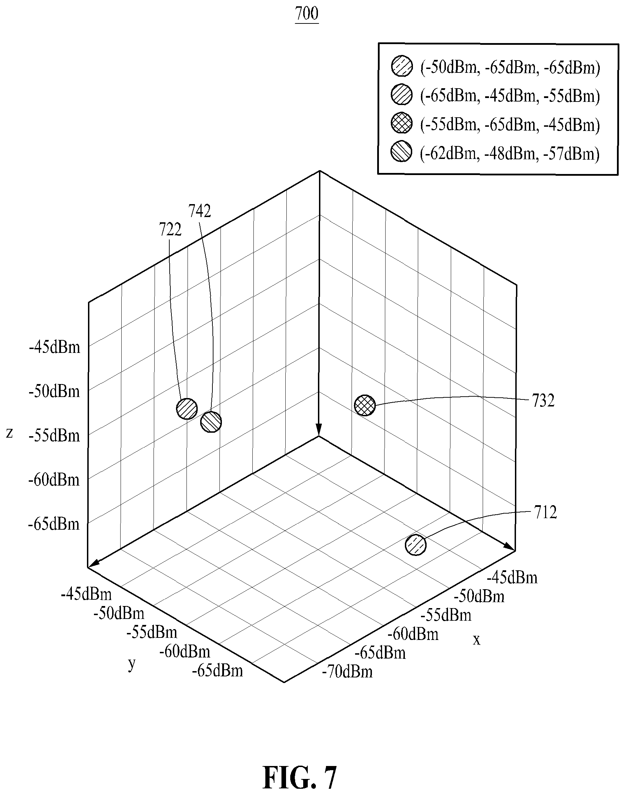

In operation 610, the processor of the electronic device may arrange (e.g. represent, plot, map, include etc.) the one or more reference signal strength patterns and the first signal strength pattern in a coordinate system (e.g. the same coordinate system). For example, the coordinate system has a dimension corresponding to the number of one or more external electronic devices (e.g., the one or more external electronic devices 210, 220, and 230 of FIG. 2). For example, if there are three external electronic devices, the coordinate system is a three-dimensional coordinate system with three axes. Each axis of the coordinate system may represent the signal strength of a corresponding external electronic device. A method of arranging the one or more reference signal strength patterns and the first signal strength pattern in the same coordinate system is described in detail below with reference to FIG. 7.

In operation 620, the processor of the electronic device may calculate the distances (or difference(s)) between the first signal strength pattern and the one or more reference signal strength patterns based on the coordinate system. For example, when the one or more reference signal strength patterns include a first reference signal strength pattern, a second reference signal strength pattern, and a third reference signal strength pattern, a first distance between the first signal strength pattern and the first reference signal strength pattern, a second distance between the first signal strength pattern and the second reference signal strength pattern, and a third distance between the first signal strength pattern and the third reference signal strength pattern are calculated.

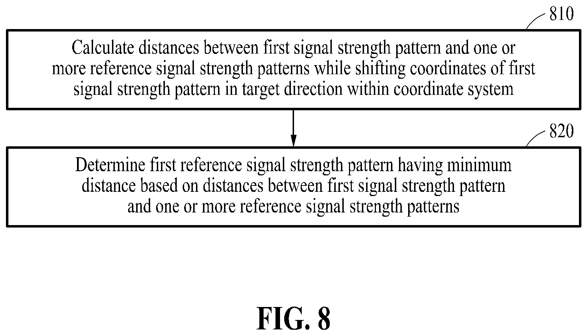

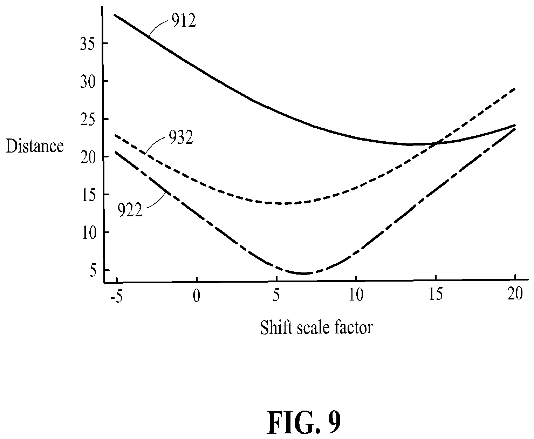

According to an embodiment, because the one or more external electronic devices and the electronic device have different performances of antennas and amplifiers, the RSSI values measured by the one or more external electronic devices and the electronic device may be different. A method of calculating the distances between the first signal strength pattern and the one or more reference signal strength patterns considering the RF performance difference described above is described in detail below with reference to FIGS. 8 and 9.

In operation 630, the processor of the electronic device may determine a target reference signal strength pattern corresponding to the first signal strength pattern based on the distances between the first signal strength pattern and the one or more reference signal strength patterns.

According to an embodiment, the electronic device determines a reference signal strength pattern having the minimum distance (herein, this may also be referred to as a/the smallest distance) among the calculated distances to be the target reference signal strength pattern.

FIG. 7 illustrates a coordinate system in which one or more reference signal strength patterns and a first signal strength pattern are arranged, according to an embodiment.

According to an embodiment, when one or more external electronic devices include a first external electronic device (e.g., the first external electronic device 210 of FIG. 2), a second external electronic device (e.g., the second external electronic device 220 of FIG. 2), and a third external electronic device (e.g., the third external electronic device 230 of FIG. 2), a coordinate system 700 is three-dimensional. For example, in the coordinate system 700, the x-axis may represent a first signal strength for the first external electronic device, the y-axis may represent a second signal strength for the second external electronic device, and the z-axis may represent a third signal strength for the third external electronic device.

According to an embodiment, the electronic device arranges, in the coordinate system 700, a first reference signal strength pattern 712 received from the first external electronic device, a second reference signal strength pattern 722 received from the second external electronic device, and a third reference signal strength pattern 732 received from the third external electronic device. According to an embodiment, the electronic device arranges a first signal strength pattern 742 generated by the electronic device in the coordinate system 700.

The electronic device may calculate a first distance between the first signal strength pattern 742 and the first reference signal strength pattern 712, a second distance between the first signal strength pattern 742 and the second reference signal strength pattern 722, and a third distance between the first signal strength pattern 742 and the third reference signal strength pattern 732. The electronic device may determine the minimum or smallest distance between the first distance, the second distance, and the third distance.

FIG. 8 is a flowchart of a method of determining a target reference signal strength pattern having a minimum distance based on the distances between a first signal strength pattern and reference signal strength patterns, according to an embodiment.

According to an embodiment, when one or more external electronic devices (e.g., the one or more external electronic devices 210, 220, and 230 of FIG. 2) and an electronic device (e.g., the electronic device 101 of FIG. 1 or the electronic device 240 of FIG. 2) have different performances of antennas and amplifiers, the RSSI values measured by the one or more external electronic devices and the electronic device may be different. Even when the second external electronic device and the electronic device are in the same position, the RSSI value measured by the second external electronic device receiving the signal (or message) transmitted by the first external electronic device may be different from the RSSI value measured by the electronic device receiving the signal transmitted by the first external electronic device. Accordingly, each of the signal strengths of the one or more reference signal strength patterns and the first signal strength pattern may not represent the absolute distance between corresponding devices.

Since the RF performance difference is caused by the elements of antennas and amplifiers used by signal receiving devices, it may not be applied differently to each signal transmitting device. For example, when the second external electronic device and the electronic device are in the same position, the RSSI values measured by the second external electronic device receiving the signals transmitted by the first external electronic device and the third external electronic device may be different from the RSSI values measured by the electronic device receiving the signals transmitted by the first external electronic device and the third external electronic device, but difference values therebetween may be the same or similar (e.g. the difference in signal strength value between the first and third external electronic devices as measured by the second external electronic device is the same as, or similar to, the difference in signal strength value between the first and third external electronic devices as measured by the electronic device). For example, the RSSI value of the first external electronic device and the RSSI value of the third external electronic device, determined by the second external electronic device, may be -65 dBm and -55 dBm, respectively, and the RSSI value of the first external electronic device and the RSSI value of the third external electronic device, determined by the electronic device, may be -55 dBm and -45 dBm, respectively. If the electronic device has a better performance of the element used for communication than the first external electronic device, the calculated RSSI values may be about -10 dBm greater. The tendency of the difference between the determined RSSI values, which appears according to the RF performance difference, may be expressed by the same direction vector of the coordinate system. The normalized direction vector may be (1, 1, 1, ..., 1). For example, if the coordinate system is three-dimensional, the normalized direction vector is (1, 1, 1).

According to an embodiment, operations 810 and 820 below may be related to operation 340 described above with reference to FIG. 3. For example, operation 340 may include operations 810 and 820. Operations 810 and 820 may be performed by an electronic device (e.g., the electronic device 101 of FIG. 1 or the electronic device 240 of FIG. 2). For example, the electronic device may include a processor (e.g., the processor 120 of FIG. 1), a communication module (e.g., the communication module 190 of FIG. 1), a memory (e.g., the memory 130 of FIG. 1), and a display (e.g., the display module 160 of FIG. 1).

In operation 810, the processor of the electronic device may calculate the distances between the first signal strength pattern and one or more reference signal strength patterns (e.g., the first signal strength pattern 712, the second reference signal strength pattern 722, and the third reference signal strength pattern 732 of FIG. 7), while shifting the coordinates of a first signal strength pattern (e.g., the first signal strength pattern 742 of FIG. 7) in a target direction. The target direction may be preset. The target direction may be expressed by a direction vector. Direction vector components may be identical to each other. For example, the normalized direction vector is (1, 1, 1, ..., 1). For example, if the coordinate system is three-dimensional, the normalized direction vector is (1, 1, 1).

According to an embodiment, the processor of the electronic device shifts the coordinates of the first signal strength pattern in the target direction by multiplying or adding the same shift scale factor by or to the components of the normalized direction vector. For example, the initial coordinates of the first signal strength pattern are shifted by (+5dBm, +5dBm, +5dBm), and a first distance, a second distance, and a third distance are calculated based on the shifted coordinates of the first signal strength pattern. In another example, the initial coordinates of the first signal strength pattern are shifted by (+10dBm, +10dBm, +10dBm), and the first distance, the second distance, and the third distance are calculated based on the shifted coordinates of the first signal strength pattern. The processor of the electronic device may calculate a plurality of first distances, a plurality of second distances, and a plurality of third distances while shifting the initial coordinates of the first signal strength pattern.

In operation 820, the processor of the electronic device may determine a target reference signal strength pattern having a minimum distance based on the distances between the first signal strength pattern and the one or more reference signal strength patterns. For example, the processor of the electronic device determines a target reference signal strength pattern having a minimum distance among the plurality of first distances, the plurality of second distances, and the plurality of third distances calculated while shifting the initial coordinates of the first signal strength pattern.

FIG. 9 illustrates the distances between a first signal strength pattern shifted in a target direction and reference signal strength patterns, according to an embodiment.

A plurality of first distances, a plurality of second distances, and a plurality of third distances calculated while shifting the initial coordinates of a first signal strength pattern are shown. A first trajectory 912 shows the plurality of first distances between the coordinates of the first signal strength pattern shifted according to a shift scale factor and the coordinates of a first reference signal strength pattern. A second trajectory 922 shows the plurality of second distances between the coordinates of the first signal strength pattern shifted according to the shift scale factor and the coordinates of a second reference signal strength pattern. A third trajectory 932 shows the plurality of third distances between the coordinates of the first signal strength pattern shifted according to the shift scale factor and the coordinates of a third reference signal strength pattern.

According to an embodiment, the shift amount of the coordinates of the first signal strength pattern are determined based on a normalized direction vector (e.g., (1, 1, 1)) and the shift scale factor. The shift amount of the coordinates of the first signal strength pattern may be determined by multiplying or adding the same shift scale factor by or to the components of the normalized direction vector. For example, a shift scale factor of -5 indicates that the initial coordinates of the first signal strength pattern are shifted by (-5dBm, -5dBm, -5dBm). For example, a shift scale factor of 0 indicates that the initial coordinates of the first signal strength pattern are not shifted. For example, a shift scale factor of 5 (i.e. +5) indicates that the initial coordinates of the first signal strength pattern are shifted by (+5dBm, +5dBm, +5dBm).

Among one or more external electronic devices (e.g., the external electronic devices 210, 220, and 230 of FIG. 2), a second external electronic device located in the same space (e.g., a second room) as an electronic device (e.g., the electronic device 101 of FIG. 1 or the electronic device 240 of FIG. 2) may be sufficiently close thereto as the shift scale factor changes (e.g. the second external electronic device has a corresponding reference signal strength pattern within a predetermined amount of one of the shifted initial coordinates of the first signal strength pattern). For example, among the one or more external electronic devices, a first external electronic device and a third external electronic device located in a space (e.g., a first room or a third room) different from the space where the electronic device is located may not be close thereto by more than a predetermined level as the shift scale factor changes. A second reference signal strength pattern corresponding to the second trajectory 922 having the minimum distance (e.g. corresponding to the point (e.g. shift scale factor value) along the second trajectory 922 having the smallest distance value, this being the smallest distance of any of the first trajectory 912, the second trajectory 922, and the third trajectory 932), among the first trajectory 912, the second trajectory 922, and the third trajectory 932, may be determined to be the target reference signal strength pattern.

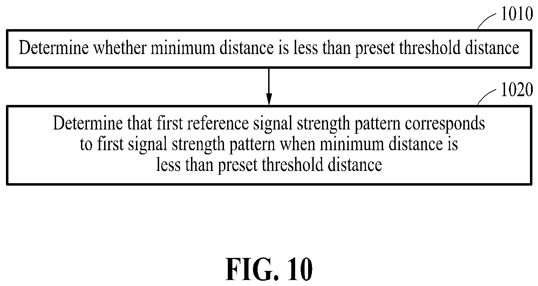

FIG. 10 is a flowchart of a method of determining whether a target reference signal strength pattern corresponds to a first signal strength pattern based on the calculated minimum distance and a threshold distance between the first signal strength pattern and the target reference signal strength pattern, according to an embodiment.

According to an embodiment, operations 1010 and 1020 below may be related to operation 630 described above with reference to FIG. 6. For example, operation 630 may include operations 1010 and 1020. Operations 1010 and 1020 may be performed by an electronic device (e.g., the electronic device 101 of FIG. 1 or the electronic device 240 of FIG. 2). For example, the electronic device may include a processor (e.g., the processor 120 of FIG. 1), a communication module (e.g., the communication module 190 of FIG. 1), a memory (e.g., the memory 130 of FIG. 1), and a display (e.g., the display module 160 of FIG. 1).

In operation 1010, the processor of the electronic device may determine whether the minimum distance among the distances between the first signal strength pattern and the one or more reference signal strength patterns is less than a preset threshold distance.

In operation 1020, the processor of the electronic device may determine that the target reference signal strength pattern corresponds to the first signal strength pattern when the minimum distance is less than the preset threshold distance. When the minimum distance is less than the preset threshold distance, it may be determined that the target reference signal strength pattern corresponds to the first signal strength pattern. When the minimum distance is greater than or equal to the preset threshold distance, it may be determined that the target reference signal strength pattern does not correspond to the first signal strength pattern. When the minimum distance is greater than or equal to the preset threshold distance, it may indicate that the electronic device is located closest to the external electronic device related to the first signal strength pattern, but the electronic device and the external electronic device are not located in the same space.

According to an embodiment, as it is determined that the target reference signal strength pattern corresponds to (e.g. matches or is suitably similar to) the first signal strength pattern, it is determined that the electronic device is located in the same space as the space where the external electronic device related to the target reference signal strength pattern is installed.

FIG. 11 is a flowchart of a method of updating a reference signal strength pattern, performed by an external electronic device, according to an embodiment.

Operations 1110 to 1150 below may be performed by an external electronic device (e.g., the first external electronic device 210, the second external electronic device 220, or the third external electronic device 230 of FIG. 2). For example, the external electronic device may include a processor (e.g., the processor 120 of FIG. 1), a communication module (e.g., the communication module 190 of FIG. 1), a memory (e.g., the memory 130 of FIG. 1), and a display (e.g., the display module 160 of FIG. 1).

In operation 1110, the processor of the external electronic device may transmit a first message to one or more external electronic devices (e.g., the external electronic devices 210, 220, and 230 of FIG. 2) through the communication module. For example, the first message is a message related to a probe request. The description of operation 310 described above with reference to FIG. 3 may similarly apply to the description of operation 1110. For example, the term "electronic device" in the description of operation 310 may be replaced with the term "external electronic device" to describe operation 1110. Each of the one or more external electronic devices receiving the first message may operate as an AP (or soft AP) for the external electronic device transmitting the first message.

In operation 1120, the processor of the external electronic device may receive one or more second messages in response to (e.g. following, or as a consequence of) the first message from the one or more external electronic devices through the communication module. For example, the second messages are messages related to a probe response.

According to an embodiment, even when the external electronic device does not transmit the first message to the one or more external electronic devices, the external electronic device may receive second messages from one or more other external electronic devices. A second message may be any one of all messages transmitted from (e.g. broadcast from) each of the one or more external electronic devices to the other electronic devices. Even if operation 1110 is not performed in the above embodiment, the processor of the external electronic device may receive second messages from one or more external electronic devices through the communication module, in operation 1120.

In operation 1130, the processor of the external electronic device may generate a current reference signal strength pattern (e.g., the first reference signal strength pattern 212, the second reference signal strength pattern 222, or the third reference signal strength pattern 232 of FIG. 2) for the one or more external electronic devices based on the second messages. Since the external electronic device may not directly measure its signal strength, the signal strength of the external electronic device included in the current reference signal strength pattern may be a preset signal strength. The description of the method of generating the first reference signal strength pattern by the first external electronic device 210, described above with reference to FIG. 4, may similarly apply to the description of the method of generating the current reference signal strength pattern by the external electronic device.

In operation 1140, the processor of the external electronic device may determine whether the current reference signal strength pattern corresponds to a previous reference signal strength pattern generated for the one or more external electronic devices. For example, if the position of installation of any one of the one or more external electronic devices changes, the current reference signal strength pattern may not correspond to the previous reference signal strength pattern. For example, if an external electronic device is uninstalled or newly installed, the current reference signal strength pattern may not correspond to the previous reference signal strength pattern.

According to an embodiment, the processor of the external electronic device determines that the current reference signal strength pattern corresponds to the previous reference signal strength pattern when the signal strength of the current reference signal strength pattern is the same as the signal strength corresponding to the previous reference signal strength pattern or changes by less than a threshold value.

According to an embodiment, the processor of the external electronic device determines that the current reference signal strength pattern corresponds to the previous reference signal strength pattern if all the signal strengths of the current reference signal strength pattern increase or decrease to correspond to a normalized direction vector, even when at least one signal strength of the current reference signal strength pattern differs from the signal strength corresponding to the previous reference signal strength pattern or changes by more than the threshold value. In other words, even when at least one signal strength of the current reference signal strength pattern differs from the signal strength corresponding to the previous reference signal strength pattern or changes by more than the threshold value, the current reference signal strength pattern is determined to correspond to the previous reference signal strength pattern if each signal strength value of the current reference signal strength pattern increase or decrease by the same amount, such as specified/indicated in a normalized direction vector. For example, due to component degradation or changes in the environment around the external electronic device (e.g. the addition of new objects), the signal strengths of the external electronic devices, as measured by said external electronic device, may have decreased, yet neither said external electronic device nor the other external electronic devices have changed location.

According to an embodiment, the processor of the external electronic device determines that the current reference signal strength pattern is different from the previous reference signal strength pattern when at least one signal strength of the current reference signal strength pattern differs from the signal strength corresponding to the previous reference signal strength pattern or changes by more than the threshold value.

According to an embodiment, the processor of the external electronic device determines that the current reference signal strength pattern is different from the previous reference signal strength pattern when the number of external electronic devices related to the current reference signal strength pattern differs from the number of external electronic devices related to the previous reference signal strength pattern.

In operation 1150, the processor of the external electronic device may transmit the current reference signal strength pattern to a user terminal (e.g., the electronic device 101 of FIG. 1 or the electronic device 240 of FIG. 2) through the communication module, when the current reference signal strength pattern does not correspond to the previous reference signal strength pattern. For example, the processor of the external electronic device transmits an event message including the current reference signal strength pattern to the user terminal or a server. The event message may be a message for an event indicating that the current reference signal strength pattern is updated. The current reference signal strength pattern transmitted to the user terminal may be used to determine the position of the user terminal.

When the current reference signal strength pattern corresponds to the previous reference signal strength pattern, the processor of the external electronic device may discard the generated current reference signal strength pattern. Only when the current reference signal strength pattern does not correspond to the previous reference signal strength pattern, may the current reference signal strength pattern be updated, enabling efficient use of communication resources.

FIG. 12 is a flowchart of a method of determining whether a current reference signal strength pattern corresponds to a previous reference signal strength pattern, according to an embodiment.

According to an embodiment, operations 1210 and 1220 below may be related to operation 1140 described above with reference to FIG. 11. For example, operation 1140 may include operations 1210 and 1220. Operations 1210 and 1220 may be performed by an external electronic device (e.g., the first external electronic device 210, the second external electronic device 220, or the third external electronic device 230 of FIG. 2). For example, the external electronic device may include a processor (e.g., the processor 120 of FIG. 1), a communication module (e.g., the communication module 190 of FIG. 1), a memory (e.g., the memory 130 of FIG. 1), and a display (e.g., the display module 160 of FIG. 1).

In operation 1210, the processor of the external electronic device may arrange the current reference signal strength pattern and the previous reference signal strength pattern in the same coordinate system. The coordinate system may have a dimension corresponding to the number of one or more external electronic devices (e.g., the one or more external electronic devices 210, 220, and 230 of FIG. 2). For example, if there are three external electronic devices, the coordinate system is a three-dimensional coordinate system with three axes. Each axis of the coordinate system may represent the signal strength of a corresponding external electronic device. For a number N of external electronic devices, the coordinate system is a N-dimensional coordinate system, which may be represented by N axes.

The description of the method of arranging the current reference signal strength pattern and the previous reference signal strength pattern in the same coordinate system may be replaced with the description of the method of arranging the one or more reference signal strength patterns and the first signal strength pattern in the same coordinate system described above with reference to FIG. 7.

In operation 1220, the processor of the external electronic device may determine whether the current reference signal strength pattern corresponds to the previous reference signal strength pattern based on whether it is possible to cause the current reference signal strength pattern to correspond to the previous reference signal strength pattern by shifting the coordinates of the current reference signal strength pattern in a target direction within the coordinate system. For example, if the minimum distance among the distances between the current reference signal strength pattern and the previous reference signal strength pattern, calculated by shifting the coordinates of the current reference signal strength pattern in the target direction within the coordinate system, is less than a threshold value, it may be determined that the current reference signal strength pattern corresponds to the previous reference signal strength pattern. The target direction may be expressed by a direction vector. Direction vector components may be identical to each other. For example, the normalized direction vector is (1, 1, 1, ..., 1). For example, if the coordinate system is three-dimensional, the normalized direction vector is (1, 1, 1).

According to an embodiment, an electronic device 101; 240 includes a communication module 190, at least one processor 120, and a memory 130 configured to store instructions executable by the at least one processor 120.

According to an embodiment, the instructions, when executed by the at least one processor 120, cause the electronic device 101; 240 to at least: transmit a first message to one or more external electronic devices 210; 220; 230, through the communication module 190.

According to an embodiment, the instructions, when executed by the at least one processor 120, cause the electronic device 101; 240 to at least: receive one or more second messages in response to the first message from the one or more external electronic devices 210; 220; 230, through the communication module 190.

According to an embodiment, the instructions, when executed by the at least one processor 120, cause the electronic device 101; 240 to at least: generate a first signal strength pattern 242 for the one or more external electronic devices 210; 220; 230, based on the second messages.

According to an embodiment, the instructions, when executed by the at least one processor 120, cause the electronic device 101; 240 to at least: determine a target reference signal strength pattern corresponding to the first signal strength pattern 242 among one or more reference signal strength patterns 212; 222; 232 received in advance from the one or more external electronic devices 210; 220; 230.

According to an embodiment, the instructions, when executed by the at least one processor 120, cause the electronic device 101; 240 to at least: determine a position of the electronic device 101; 240 based on the target reference signal strength pattern.

According to an embodiment, the instructions, when executed by the at least one processor 120, cause the electronic device 101; 240 to at least: receive event messages including the one or more reference signal strength patterns 212; 222; 232 from the one or more external electronic devices 210; 220; 230, through the communication module 190.

According to an embodiment, the target reference signal strength pattern among the one or more reference signal strength patterns 212; 222; 232 is generated by a first external electronic device 210 among the one or more external electronic devices 210; 220; 230.

According to an embodiment, the target reference signal strength pattern includes a first signal strength 212a for the first external electronic device 210 and a second signal strength 212b; 212c for a transmission signal from a second external electronic device 220; 230 measured by the first external electronic device 210.

According to an embodiment, the first signal strength 212a for the first external electronic device 210 is a preset signal strength.

According to an embodiment, the instructions, when executed by the at least one processor 120, cause the electronic device 101; 240 to at least: arrange the one or more reference signal strength patterns 212; 222; 232 and the first signal strength pattern 242 in a same coordinate system 700.

According to an embodiment, the instructions, when executed by the at least one processor 120, cause the electronic device 101; 240 to at least: calculate distances between the first signal strength pattern 242 and the one or more reference signal strength patterns 212; 222; 232 based on the coordinate system 700.

According to an embodiment, the instructions, when executed by the at least one processor 120, cause the electronic device 101; 240 to at least: determine the target reference signal strength pattern corresponding to the first signal strength pattern 242 based on the distances between the first signal strength pattern 242 and the one or more reference signal strength patterns 212; 222; 232.

According to an embodiment, the instructions, when executed by the at least one processor 120, cause the electronic device 101; 240 to at least: calculate the distances between the first signal strength pattern 242 and the one or more reference signal strength patterns 212; 222; 232 while shifting coordinates of the first signal strength pattern 242 in a target direction within the coordinate system 700.

According to an embodiment, the instructions, when executed by the at least one processor 120, cause the electronic device 101; 240 to at least: determine the target reference signal strength pattern having a minimum distance based on the distances between the first signal strength pattern 242 and the one or more reference signal strength patterns 212; 222; 232.

According to an embodiment, direction vector components indicating the target direction are the same as each other.

According to an embodiment, the instructions, when executed by the at least one processor 120, cause the electronic device 101; 240 to at least: determine whether the minimum distance is less than a preset threshold distance.

According to an embodiment, the instructions, when executed by the at least one processor 120, cause the electronic device 101; 240 to at least: determine that the target reference signal strength pattern corresponds to the first signal strength pattern 242 when the minimum distance is less than the preset threshold distance.

According to an embodiment, the instructions, when executed by the at least one processor 120, cause the electronic device 101; 240 to at least: determine a position set in a first external electronic device 210 generating the target reference signal strength pattern to be the position of the electronic device 101; 240.

According to an embodiment, the instructions, when executed by the at least one processor 120, cause the electronic device 101; 240 to at least: identify a first external electronic device 210 among the one or more external electronic devices 210; 220; 230, through the communication module 190.

According to an embodiment, the instructions, when executed by the at least one processor 120, cause the electronic device 101; 240 to at least: transmit the first message to the identified first external electronic device 210 through the communication module 190.

According to an embodiment, a method of determining a position of an electronic device 101; 240, performed by the electronic device 101; 240, includes transmitting 310; 512; 514; 516 a first message to one or more external electronic devices 210; 220; 230.

According to an embodiment, the method of determining a position of an electronic device 101; 240, performed by the electronic device 101; 240, includes receiving 320; 522; 524; 526 one or more second messages in response to the first message from the one or more external electronic devices 210; 220; 230.

According to an embodiment, the method of determining a position of an electronic device 101; 240, performed by the electronic device 101; 240, includes generating 330; 530 a first signal strength pattern 242 for the one or more external electronic devices 210; 220; 230, based on the second messages.

According to an embodiment, the method of determining a position of an electronic device 101; 240, performed by the electronic device 101; 240, includes determining 340 a target reference signal strength pattern corresponding to the first signal strength pattern 242 among one or more reference signal strength patterns 212; 222; 232 received in advance from the one or more external electronic devices 210; 220; 230.

According to an embodiment, the method of determining a position of an electronic device 101; 240, performed by the electronic device 101; 240, includes determining 350 a position of the electronic device 101; 240 based on the target reference signal strength pattern.

According to an embodiment, the method of determining a position of an electronic device 101; 240, performed by the electronic device 101; 240, includes receiving 412; 422; 432 event messages including the one or more reference signal strength patterns 212; 222; 232 from the one or more external electronic devices 210; 220; 230.

According to an embodiment, the target reference signal strength pattern among the one or more reference signal strength patterns 212; 222; 232 is generated by a first external electronic device 210 among the one or more external electronic devices 210; 220; 230.

According to an embodiment, the target reference signal strength pattern includes a first signal strength 212a for the first external electronic device 210 and a second signal strength 212b for a transmission signal from a second external electronic device 220 measured by the first external electronic device 210.

According to an embodiment, the determining 340 of the target reference signal strength pattern corresponding to the first signal strength pattern 242 among the one or more reference signal strength patterns 212; 222; 232 received in advance from the one or more external electronic devices 210; 220; 220 includes arranging 610 the one or more reference signal strength patterns 212; 222; 232 and the first signal strength pattern 242 in a same coordinate system 700.

According to an embodiment, the determining 340 of the target reference signal strength pattern corresponding to the first signal strength pattern 242 among the one or more reference signal strength patterns 212; 222; 232 received in advance from the one or more external electronic devices 210; 220; 220 includes calculating 620 distances between the first signal strength pattern 242 and the one or more reference signal strength patterns 212; 222; 232 based on the coordinate system 700.

According to an embodiment, the determining 340 of the target reference signal strength pattern corresponding to the first signal strength pattern 242 among the one or more reference signal strength patterns 212; 222; 232 received in advance from the one or more external electronic devices 210; 220; 220 includes determining 630 the target reference signal strength pattern corresponding to the first signal strength pattern 242 based on the distances between the first signal strength pattern 242 and the one or more reference signal strength patterns 212; 222; 232.

According to an embodiment, the calculating 630 of the distances between the first signal strength pattern 242 and the one or more reference signal strength patterns 212; 222; 232 based on the coordinate system 700 includes calculating 810 the distances between the first signal strength pattern 242 and the one or more reference signal strength patterns 212; 222; 232 while shifting coordinates of the first signal strength pattern 242 in a target direction within the coordinate system 700.

According to an embodiment, a method of transmitting a reference signal strength pattern 212, performed by an electronic device 210, includes transmitting 1110 a first message to one or more external electronic devices 210; 220; 230.

According to an embodiment, the method of transmitting a reference signal strength pattern 212, performed by an electronic device 210, includes receiving 1120 one or more second messages in response to the first message from the one or more external electronic devices 210; 220; 230.

According to an embodiment, the method of transmitting a reference signal strength pattern 212, performed by an electronic device 210, includes generating 1130 a current reference signal strength pattern for the one or more external electronic devices 210; 220; 230, based on the second messages.

According to an embodiment, the method of transmitting a reference signal strength pattern 212, performed by an electronic device 210, includes determining 1140 whether the current reference signal strength pattern corresponds to a previous reference signal strength pattern generated in advance for the one or more external electronic devices 210; 220; 230.

According to an embodiment, the method of transmitting a reference signal strength pattern 212, performed by an electronic device 210, includes transmitting 1150 the current reference signal strength pattern to a user terminal 101; 240 or a server 108 when the current reference signal strength pattern does not correspond to the previous reference signal strength pattern.

According to an embodiment, the current reference signal strength pattern is used to determine a position of the user terminal.

According to an embodiment, the current reference signal strength pattern includes a first signal strength 212a for the electronic device 210 and a second signal strength 212b; 212c for a transmission signal from a first external electronic device 220; 230 measured by the electronic device 210.

According to an embodiment, the first signal strength 212a for the electronic device 210 is a preset signal strength.

According to an embodiment, the determining 1140 of whether the current reference signal strength pattern corresponds to the previous reference signal strength pattern generated in advance for the one or more external electronic devices 210; 220; 230 includes arranging 1210 the current reference signal strength pattern and the previous reference signal strength pattern in a same coordinate system 700.

According to an embodiment, the determining 1140 of whether the current reference signal strength pattern corresponds to the previous reference signal strength pattern generated in advance for the one or more external electronic devices 210; 220; 230 includes determining 1220 whether the current reference signal strength pattern corresponds to the previous reference signal strength pattern based on whether it is possible to cause the current reference signal strength pattern to correspond to the previous reference signal strength pattern by shifting coordinates of the current reference signal strength pattern in a target direction within the coordinate system 700.

According to an embodiment, direction vector components indicating the target direction are the same as each other.

There now follow a set of numbered examples describing various examples according to the present disclosure:
Example 1. An electronic device comprising: a communication module; at least one processor; and a memory configured to store instructions executable by the at least one processor, wherein the instructions, when executed by the at least one processor, cause the electronic device to: transmit a first message to one or more external electronic devices, through the communication module; receive one or more second messages from the one or more external electronic devices, through the communication module; generate a first signal strength pattern for the one or more external electronic devices, based on the second messages; determine a target reference signal strength pattern corresponding to the first signal strength pattern among one or more reference signal strength patterns; and determine a position of the electronic device based on the target reference signal strength pattern.
Example 2. The electronic device of Example 1, wherein the instructions, when executed by the at least one processor, cause the electronic device to: receive event messages comprising the one or more reference signal strength patterns from the one or more external electronic devices, through the communication module.
Example 3. The electronic device of any one of Examples 1 and 2, wherein the target reference signal strength pattern among the one or more reference signal strength patterns is received from a first external electronic device among the one or more external electronic devices, and the target reference signal strength pattern comprises a first signal strength for the first external electronic device and a second signal strength for a transmission signal from a second external electronic device.
Example 4. The electronic device of any one of claims 1 to 3, wherein the first signal strength for the first external electronic device is a preset signal strength.
Example 5. The electronic device of any one of claims 1 to 4, wherein the instructions, when executed by the at least one processor, cause the electronic device to: arrange the one or more reference signal strength patterns and the first signal strength pattern in a coordinate system; calculate one or more first distances between the first signal strength pattern and the one or more reference signal strength patterns based on the coordinate system; and determine the target reference signal strength pattern corresponding to the first signal strength pattern based on the one or more first distances between the first signal strength pattern and the one or more reference signal strength patterns.
Example 6. The electronic device of any one of Examples 1 to 5, wherein the instructions, when executed by the at least one processor, cause the electronic device to: shifting coordinates of the first signal strength pattern in a target direction within the coordinate system one or more times; calculate one or more second distances between the one or more shifted first signal strength pattern and the one or more reference signal strength patterns; and determine the target reference signal strength pattern based on the one or more first distances between the first signal strength pattern and the one or more reference signal strength patterns and the one or more second distances between the one or more shifted first signal strength pattern and the one or more reference signal strength patterns.
Example 7. The electronic device of Example 6, wherein the instructions, when executed by the at least one processor, cause the electronic device to: determine the target reference signal strength pattern as a reference signal strength pattern, among the one or more reference signal strength patterns, having a smallest distance among the one or more first distances and the one or more second distances.
Example 8. The electronic device of any one of Examples 5 to 7, wherein direction vector components indicating the target direction are the same as each other.
Example 9. The electronic device of Example 7, wherein the instructions, when executed by the at least one processor, cause the electronic device to: determine whether the smallest distance is less than a preset threshold distance; and determine that the target reference signal strength pattern corresponds to the first signal strength pattern when the smallest distance is less than the preset threshold distance.
Example 10. The electronic device of any one of Examples 1 to 9, wherein the instructions, when executed by the at least one processor, cause the electronic device to: determine a position corresponding to a first external electronic device generating the target reference signal strength pattern to be the position of the electronic device.
Example 11. The electronic device of any one of Examples 1 to 9, wherein the instructions, when executed by the at least one processor, cause the electronic device to: identify a first external electronic device among the one or more external electronic devices, through the communication module; and transmit the first message to the identified first external electronic device through the communication module.
Example 12. A method of determining a position of an electronic device, performed by the electronic device, the method comprising: transmitting a first message to one or more external electronic devices; receiving one or more second messages from the one or more external electronic devices; generating a first signal strength pattern for the one or more external electronic devices, based on the second messages; determining a target reference signal strength pattern corresponding to the first signal strength pattern among one or more reference signal strength patterns; and determining a position of the electronic device based on the target reference signal strength pattern.
Example 13. The method of Example 12, further comprising: receiving event messages comprising the one or more reference signal strength patterns from the one or more external electronic devices.
Example 14. The method of Example 12 or 13, wherein: the target reference signal strength pattern among the one or more reference signal strength patterns is received from a first external electronic device among the one or more external electronic devices; and the target reference signal strength pattern comprises a first signal strength for the first external electronic device and a second signal strength for a transmission signal from a second external electronic device.
Example 15. The method of any one of Examples 12 to 14, wherein the determining of the target reference signal strength pattern corresponding to the first signal strength pattern among the one or more reference signal strength patterns comprises: arranging the one or more reference signal strength patterns and the first signal strength pattern in a coordinate system; calculating one or more first distance between the first signal strength pattern and the one or more reference signal strength patterns based on the coordinate system; and determining the target reference signal strength pattern corresponding to the first signal strength pattern based on the first distances between the first signal strength pattern and the one or more reference signal strength patterns.
Example 16. The method of any one of Examples 12 to 15, further comprising calculating one or more second distances between the one or more shifted first signal strength pattern and the one or more reference signal strength patterns; wherein the target reference signal strength pattern is determined based on the one or more first distances and the one or more second distances.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. An electronic device (101; 240) comprising:
a communication module (190);
at least one processor (120); and
a memory (130) configured to store instructions executable by the at least one processor (120), wherein
the instructions, when executed by the at least one processor (120), cause the electronic device to:
transmit (310) a first message to one or more external electronic devices (210; 220; 230), through the communication module,
receive (320) one or more second messages from the one or more external electronic devices, through the communication module,
generate (330) a first signal strength pattern (242) for the one or more external electronic devices, based on the second messages,
determine (340) a target reference signal strength pattern corresponding to the first signal strength pattern among one or more reference signal strength patterns (212; 222; 232), and
determine (350) a position of the electronic device based on the target reference signal strength pattern.

2. The electronic device of claim 1, wherein the instructions, when executed by the at least one processor (120), cause the electronic device to:
receive event messages comprising the one or more reference signal strength patterns from the one or more external electronic devices, through the communication module.

3. The electronic device of any one of claims 1 and 2, wherein
the target reference signal strength pattern among the one or more reference signal strength patterns is received from a first external electronic device (210) among the one or more external electronic devices, and
the target reference signal strength pattern comprises a first signal strength (212a) for the first external electronic device and a second signal strength (212b; 212c) for a transmission signal from a second external electronic device (220; 230).

4. The electronic device of any one of claims 1 to 3, wherein the first signal strength for the first external electronic device is a preset signal strength.

5. The electronic device of any one of claims 1 to 4, wherein the instructions, when executed by the at least one processor (120), cause the electronic device to:
arrange the one or more reference signal strength patterns and the first signal strength pattern in a coordinate system (700),
calculate one or more first distances between the first signal strength pattern and the one or more reference signal strength patterns based on the coordinate system, and
determine the target reference signal strength pattern corresponding to the first signal strength pattern based on the one or more first distances between the first signal strength pattern and the one or more reference signal strength patterns.

6. The electronic device of any one of claims 1 to 5, wherein the instructions, when executed by the at least one processor (120), cause the electronic device to:
shifting coordinates of the first signal strength pattern in a target direction within the coordinate system one or more times,
calculate one or more second distances between the one or more shifted first signal strength pattern and the one or more reference signal strength patterns, and
determine the target reference signal strength pattern based on the one or more first distances between the first signal strength pattern and the one or more reference signal strength patterns and the one or more second distances between the one or more shifted first signal strength pattern and the one or more reference signal strength patterns.

7. The electronic device of claim 6, wherein the instructions, when executed by the at least one processor (120), cause the electronic device to:
determine the target reference signal strength pattern as a reference signal strength pattern, among the one or more reference signal strength patterns, having a smallest distance among the one or more first distances and the one or more second distances.

8. The electronic device of any one of claims 5 to 7, wherein direction vector components indicating the target direction are the same as each other.

9. The electronic device of claim 7, wherein the instructions, when executed by the at least one processor (120), cause the electronic device to:
determine whether the smallest distance is less than a preset threshold distance, and
determine that the target reference signal strength pattern corresponds to the first signal strength pattern when the smallest distance is less than the preset threshold distance.

10. The electronic device of any one of claims 1 to 9, wherein the instructions, when executed by the at least one processor (120), cause the electronic device to:
determine a position corresponding to a first external electronic device generating the target reference signal strength pattern to be the position of the electronic device.

11. The electronic device of any one of claims 1 to 9, wherein the instructions, when executed by the at least one processor (120), cause the electronic device to:
identify a first external electronic device among the one or more external electronic devices, through the communication module, and
transmit the first message to the identified first external electronic device through the communication module.

12. A method of determining a position of an electronic device, performed by the electronic device (101; 240), the method comprising:
transmitting (310; 512; 514; 516) a first message to one or more external electronic devices (210; 220; 230);
receiving (320; 522; 524; 526) one or more second messages from the one or more external electronic devices;
generating (330; 530) a first signal strength pattern (242) for the one or more external electronic devices, based on the second messages;
determining (340) a target reference signal strength pattern corresponding to the first signal strength pattern among one or more reference signal strength patterns (212; 222; 232); and
determining (350) a position of the electronic device based on the target reference signal strength pattern.

13. The method of claim 12, further comprising:
receiving (412; 422; 432) event messages comprising the one or more reference signal strength patterns from the one or more external electronic devices.

14. The method of claim 12 or 13, wherein
the target reference signal strength pattern among the one or more reference signal strength patterns is received from a first external electronic device (210) among the one or more external electronic devices, and
the target reference signal strength pattern comprises a first signal strength (212a) for the first external electronic device and a second signal strength (212b) for a transmission signal from a second external electronic device (220).

15. The method of any one of claims 12 to 14, wherein the determining of the target reference signal strength pattern corresponding to the first signal strength pattern among the one or more reference signal strength patterns comprises:
arranging (610) the one or more reference signal strength patterns and the first signal strength pattern in a coordinate system (700);
calculating (620) one or more first distances between the first signal strength pattern and the one or more reference signal strength patterns based on the coordinate system; and
determining (630) the target reference signal strength pattern corresponding to the first signal strength pattern based on the first distances between the first signal strength pattern and the one or more reference signal strength patterns.
